# EUROPÄISCHE PATENTSCHRIFT

(11) **EP 0 816 266 B1**
(45) Veröffentlichungstag und Bekanntmachung des Hinweises auf die Patenterteilung: **25.07.2001**
(21) Anmeldenummer: 97107484.4
(22) Anmeldetag: 07.05.1997
(51) Int. Cl.: B65G 53/46

(54) **Verfahren und Vorrichtung zum Befüllen einer Dichtstrom-Förderleitung**
Method and apparatus for filling a compact flow transport conduit
Procédé et dispositif pour remplir une conduite de transport en courant épais

(30) Priorität: 26.06.1996 DE 19625462
(43) Veröffentlichungstag der Anmeldung: 07.01.1998
(73) Patentinhaber: Motan-Fuller Verfahrenstechnik GmbH, 88250 Weingarten (DE)
(72) Erfinder: Heep, Dieter, 88368 Bergatreute (DE); Winkhardt, Guido, 88046 Friedrichshafen (DE); Reif, Joachim, 88213 Ravensburg (DE)
(74) Vertreter: Riebling, Peter, Dr.-Ing.

(56) Entgegenhaltungen:
- EP-A- 0 054 361
- DE-A- 1 814 474
- US-A- 2 244 050
- US-A- 3 536 235
- US-A- 3 556 606
- PATENT ABSTRACTS OF JAPAN vol. 7, no. 217 (M-245) [1362] , 27.September 1983 & JP 58 113037 A (HITACHI PLANT KENSETSU), 5.Juli 1983,

## Beschreibung

Die Erfindung betrifft ein Verfahren und eine Vorrichtung zum Befüllen einer Dichtstrom-Förderleitung nach dem Oberbegriff des Patentanspruchs 1 und des Patentanspruchs 7.

In ansich bekannter Weise wird eine Dichtstrom-Förderleitung dadurch befüllt, daß stromabwärts eines Silos eine Entnahmeleitung vorhanden ist, welche in eine abgedichtete Zellenradschleuse führt. Diese Zellenradschleuse ist drehend angetrieben und entnimmt portionsweise entsprechend dem Kammervolumen zwischen den einzelnen Stegen das Material aus der Entnahmeleitung des Silos und führt dieses Material in die Förderleitung ein. Hierbei ist es bekannt, daß die Förderleitung unter relativ hohem Druck von z. B. von 1-3 bar steht und der Dichtstrom mit relativ langsamer Geschwindigkeit gefördert wird. Derartige Anlagen werden zur Langsamförderung von Schüttgut eingesetzt, insbesondere für Kunststoffgranulat.

Verwendet man Zellenradschleusen mit axialen Abdichtungen, so verbleiben beim Drehen des Zellenrades radialen Spalten, durch die, bei den üblichen Förderdrücken von 1-3 bar pe, entsprechend der Leckluftkennlinie Förderluft entweicht. Diese Luft muß separat abgeführt und je nach Belastung entstaubt werden. Sie behindert, je nach Zellenradkonstruktion, manchmal den Zulauf, sie muß bei Druckschwankungen durch aufwendige Regelung kompensiert werden und sie kostet Energie, da die Luftversorgung der Anlage entsprechend groß ausgelegt werden muß.

Vorrichtungen zur Verhinderung der radialen Spaltluft sind z. B. aus der DE 37 42 519 C1, der DE 37 42 521 C1 und der EP-Anmeldung 93/11 662.8 bekannt geworden, wo durch mechanische Verstellung der Zellenradstege, die auf der Gehäusebohrung gleiten, der Reibungsabrieb ausgeglichen wird.

Zellenradschleusen dieser Art funktionieren nur so lange, bis die installierte, zulässige Verschleißmenge aufgebraucht ist. Konstruktionen dieser Art funktionieren mehr oder weniger schüttgutabhängig, da Staub in die Mechanik eindringen kann und die Verstellkräfte unzulässig hoch werden können.

Die US-A-3,536,235 zeigt ein schleusenartig aufgebautes System mit mehreren hintereinander geschalteten Speichern. Diese Speicher sind über Verschlußventile voneinander getrennt. Der erste Speicher ist hierbei stets auf Umgebungsdruck, der zweite Speicher schwankt zwischen dem Umgebungsdruck und Förderdruck, der dritte und vierte Speicher werden stets auf Förderdruck gehalten. Bei diesem Dosierungssystem ist es überhaupt nicht notwendig eine Zellenradschleuse vorzusehen, da der Behälter oberhalb des Dosierrades über eine Druckausgleichsleitung ständig auf Förderdruck gehalten wird. Nachteilig bei diesem stufenartig aufgebauten Dosierungssystem ist, daß dieses relativ aufwendig und kostenintensiv aufgebaut ist und das Schüttgut beim Durchlaufen der Speicher ständig gegen den Widerstand des dort herrschenden Druckes eingefüllt wird, was zu erhöhten Leckverlusten des Druckmediums und zu einer erhöhten Staubbildung führt. Somit ist diese Anlage gemäß der US-A-3,536,235 konstruktiv wesentlich aufwendiger und ebenfalls im Betrieb wesentlich kostenintensiver und aufgrund der Partikelaufwirbelung wesentlich problematischer.

Die US-A-2,244,050 zeigt bereits eine Zuführvorrichtung, bei der einer Zellenradschleuse ein Speicher vorgeschaltet ist, welcher Speicher durch ein Ventil intermettierend mit Schüttgut befüllt wird, während die Zellenradschleuse das im Speicher befindliche Schüttgut kontinuierlich in die Förderleitung einspeist. Hierbei ist es vorgesehen, einen Leckluftstrom zwischen Förderleitung und Speicher dadurch zu unterdrücken, daß der Speicher selbst über eine entsprechende Druckausgleichsleitung mit Druckausgleichsventil mit der Förderleitung in Verbindung steht. Nachteil dieser Fördervorrichtung ist hierbei, daß bei Befüllen dieses Speichers der im Speicher herrschende Überdruck, welcher dem Förderdruck entspricht, nur schlagartig über das Befüllventil des Speichers zur Atmosphäre sich hin ausgleicht und dadurch, daß in den Speicher zu fördernde Schüttgut gegen die Schüttrichtung hochgewirbelt wird. Dies führt zum einen zu einer unerwünschten Staubbildung und zum anderen wird der Befüllvorgang des Speichers im Hinblick auf die Befüllmenge und Befüllzeit gestört.

Aufgabe der vorliegenden Erfindung ist es, ein Verfahren und eine Vorrichtung der genannten Art so weiterzubilden, daß bei gleichbleibender Förderleistung die Leckluft wesentlich vermindert und ein einfaches und unproblematisches Zuführen von Schüttgut ermöglicht wird.

Die Lösung der gestellten Aufgabe erfolgt durch ein Verfahren nach den Merkmalen des Anspruches 1 und durch eine Vorrichtung nach den Merkmalen des Anspruches 7.

Das Wesen der Erfindung besteht also darin, daß man einen relativ kleinen Rohrspeicher stromabwärts des Silos anordnet und der Rohrspeicher über eine Leitung und ein Entlüftungsventil mit der Atmosphäre in Verbindung bringbar ist, wo durch bei geöffnetem Verschlußventil der Druck innerhalb des Rohrspeichers dem Atmosphärendruck entspricht und wesentlich kleiner ist als der Druck innerhalb der Förderleitung. Ebenso ist die Zellenradschleuse über eine Leckluftleitung mit dem Rohrspeicher verbunden, wodurch bei geschlossenem Verschlußventil der Druck innerhalb des Rohrspeichers gleich groß ist wie der Druck innerhalb der Förderleitung.

Das Volumen des Rohrspeichers ist auf die Taktzahl des Verschlußventils abgestimmt. Ziel hierbei ist, den Rohrspeicher bis etwa 90 % kontinuierlich durch die dauernd laufende Zellenradschleuse zu entleeren. Die Befüllung des Rohrspeichers erfolgt hierbei z.B. mit vierfach höherer Befülleistung als vergleichsweise die Entnahmeleistung durch die Zellenradschleuse (bezogen auf die Zeiteinheit). D. h., von der Einströmseite des Rohrspeichers wird das Granulat über das Verschlußventil mit vierfach höherer Förderleistung im freien Fall intervallartig (diskontinuierlich) bedingt durch die vollen, vorhandenen Rohrquerschnitte in den Rohrspeicher eingespeist. Nach Vollendung der schlagartigen Befüllung des Rohrspeichers wird das Verschlußventil geschlossen, ohne daß die kontinuierliche Entnahme aus dem Rohrspeicher durch die Zellenradschleuse gestoppt wird. Es wird also ein wesentlicher Verlust von Leckluft dadurch verhindert, daß die Druckdifferenz an der Zellenradschleuse (welche den Leckluftverlust auslöst) nur dann anliegt, wenn das Verschlußventil am Auslauf des Silos geöffnet ist. Dieses Verschlußventil wird aber so gesteuert, daß die Zeit des Verschlusses viermal größer ist als die Öffnungszeit, so daß 4/5 der Leckluft eingespart werden.

Diese Verhältnisse zwischen Verschlußzeit und Öffnungszeit des Verschlußventils sind nur beispielhaft. Hierbei ist nur wesentlich, daß die Verschlußzeit des Verschlußventils größer gewählt wird als die Öffnungszeit, um eben den Leckluftverlust zu verkleinern.

Die Zellenradschleuse arbeitet nicht während der gesamten Betriebszeit unter einer Druckdifferenz welche einen hohen Leckluftverlust auslösen würde sondern ist nur intervallmäßig einer Druckdifferenz unterworfen, während in anderen Zeiten (bei Schließung des Verschlußventils) diese Druckdifferenz nicht mehr besteht und daher auch keine Leckluft mehr entstehen kann.

Vorteilhaft ist, daß die in der Praxis bewährte Standard-Hochdruckschleusentechnik erhalten bleibt und durch Hinzufügen einer auf den Bedarfsfall abgestimmte, preiswerte Zusatzeinrichtung die Leckluftmenge um mindestens 75% verringert werden kann, wenn es die Notwendigkeit erfordert.

Grundgedanke ist u.a. die Schaffung eines Rohrspeichers über der Hochdruckschleuse, der mit einem, für hohe Schaltzahlen im Granulat schließenden, Verschlußorgang mit besonderer Dichtungstechnik ausgerüstet und so dimensioniert sein kann, daß die Zulaufleistung durch Schwerkraft mehr als viermal so groß ist, als der Massenstrom, der durch die Drehzahl der Hochdruckschleuse in die Förderleitung geschleust wird.

So beträgt z. B. bei einem Rohrspeicher vom DurchmesserDN 250 und 48 1 Inhalt die Befülleistung 2 s, während bei einem Massenstrom von 5 t/h die Entleerzeit (ohne völlige Entleerung) 21 s beträgt.

Ohne daß die Förderung unterbrochen wird, strömt immer nach einer Pause von 21 s nur 3 s Leckluft (2 + 1 s Schaltzeit). Dies entspricht einem Verhältnis von 1 : 7 und einer Leckluftverringerung von 7/8 der üblichen Leckluftmenge gleich 87,5 %. Je nach Dimensionierung der Anlagenteile kann es erforderlich sein, die Leckluft auszugleichen. Dies geschieht mit der zweiten Lavaldüse in der Druckluftzufuhr der Förderleitung, die bei gleichem Vordruck so dimensioniert ist, daß sie Förderluft und Leckluft bei Zuschaltung gleichzeitig an die Anlage abgibt.

Wichtig ist die Sicherstellung der Dichtfähigkeit des Verschlußventils bei hohem Schaltwechsel in der Granulatsäule stromaufwärts des Rohrspeichers. Dies ist Vorteilhaft so gelöst, daß bei Abdichtung des Verschlußteils mittels technischem Dichtungsmittel der durch den Granulatstrom schneidende Teil in seiner Endstellung ohne Dichtmittel metallisch an der Gehäusebohrung spaltlos anpreßt.

Nach dem Siloauslauf befindet sich ein Absperrventil und ein Rohrspeicher und nachfolgend eine Zellenradschleuse. Dazwischen angeordnet ist, in den meisten Fällen, ein Granulatvorabscheider. Bildet man den Rohrspeicher druckfest aus und füllt ihn mittels des Verschlußorgans intermittierend, so ist in allen Fällen die Lecklufteinsparung abhängig vom Verhältnis zwischen Massenstrom Befüllung zu Massenstrom Förderung. Die Frage des Füllvolumens des Rohrspeichers bestimmt nur die Taktzahl für das Öffnen und Schließen des Absperrventils.

Der Vorteil der Erfindung liegt also u.a. darin, einen kleinen Rohrspeicher mit hohen Schaltfrequenzen zu füllen und mit kontinuierlichem Massenstrom gegen hohen Druck in der Förderleitung mit einer abgedichteten Zellenradschleuse zu entleeren.

Im folgenden wird die Erfindung anhand von lediglich einen Ausführungsweg darstellenden Zeichnungen näher erläutert.

Hierbei gehen aus den Zeichnungen und ihrer Beschreibung weitere Vorteilhafte Merkmale und Vorteile der Erfindung hervor.

Es zeigen:
- Figur 1:: Schematisierter Aufbau einer Vorrichtung nach der Erfindung;
- Figur 2:: Die Vorrichtung nach Figur 1 während der leckluftfreien Förderung;
- Figur 3:: Die Vorrichtung nach Figur 1 während der leckluftbehafteten Förderung;
- Figur 4:: Ein Zeit-Druckdiagramm verschiedener Teile dieser Vorrichtung.

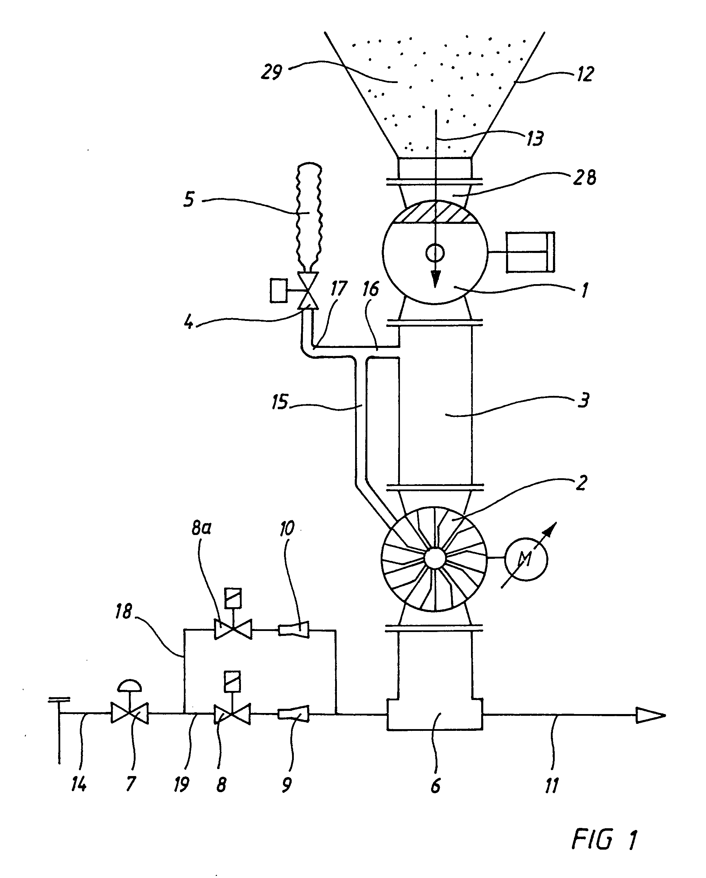

Gemäss Figur 1 wird aus einem Silo 12 ein Massenstrom von Schüttgut 29 in Pfeilrichtung 13 gefördert mit dem Zweck, diesen Massenstrom als Dichtstrom in eine unter Druck stehende Förderleitung 11 einzuspeisen.

Am Auslauf des Silos 12 ist ein motorisch und elektropneumatisch oder elektromagnetisch angetriebenes Verschlußventil 1 angeordnet, welches taktweise den Massenstrom aus dem Silo in einen Rohrspeicher 3 einfüllt.

Am Auslauf des Rohrspeichers 3 ist die Einlaufseite einer Zellenradschleuse 2 angeschlossen, welche ein motorisch angetriebenes Zellenrad aufweist, wobei das Zellenrad eine Vielzahl von Zellenkammern ausbildet, welche das Granulat aufnehmen und gegen den in der Förderleitung 11 befindlichen Druck in einen Aufgabetopf 6 fördern. An der Zellenradschleuse 2 ist eine Leckluftleitung 15 angeordnet, welche über eine abzweigende Leitung 16 mit dem oberen Teil des Rohrspeichers 3 verbunden ist und über eine weitere abzweigende Leitung 17 mit einem taktweise angesteuerten Entlüftungsventil 4 verbunden ist, das über einen Filtersack 5 mit der Atmosphäre verbunden ist.

Die Druckerzeugung in der Förderleitung 11 erfolgt ausgehend von einer Druckluftversorgung 14 über einen Druckminderer 7, von dem zwei zueinander parallele Leitungen 18,19 abzweigen. In der Leitung 18 ist ein Absperrventil 8a angeordnet, hinter dem eine Förderluftdüse 10 für den Betrieb mit Leckluft angeordnet ist. In der Leitung 19 ist wiederum ein Absperrventil 8 mit einer dahinter geschalteten Förderluftdüse 9 angeordnet, welche für den Betrieb ohne Leckluft ausgebildet ist. Die beiden Absperrventile 8,8a werden taktmäßig so gesteuert, daß entweder nur das eine oder das andere auf Durchgang geschaltet ist.

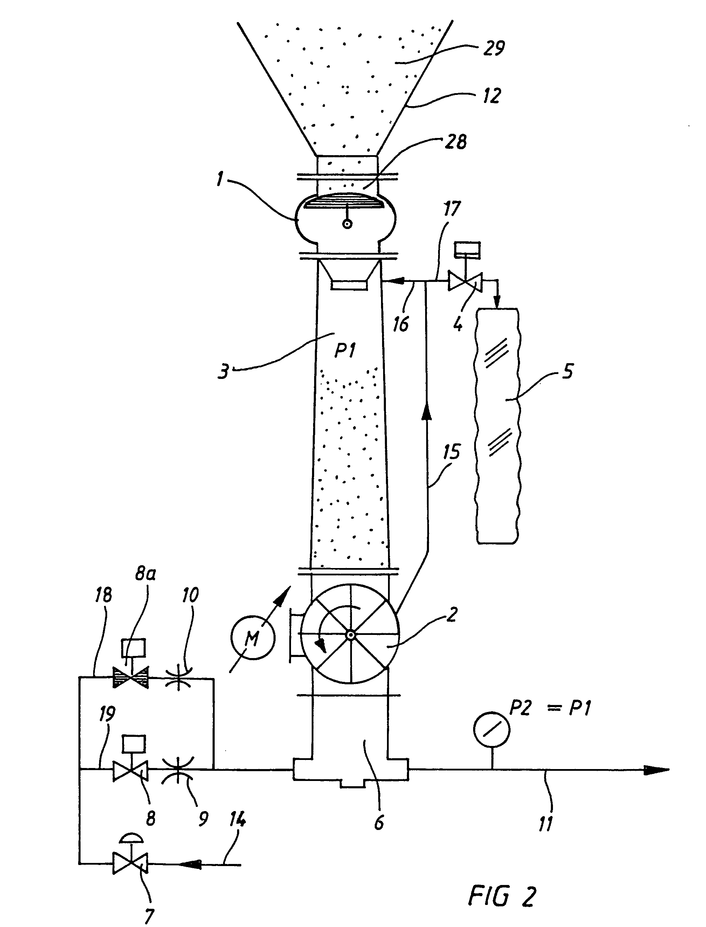

In Figur 2 wird ein erster Betriebszustand der Anlage dargestellt. Man erkennt, daß das Verschlußventil 1 geschlossen ist und der Rohrspeicher 3 etwa zu ¾ seiner Höhe befüllt ist und unter dem Druck pl steht. Das Entlüftungsventil 4 ist geschlossen. Die Zellenradschleuse 2 läuft kontinuierlich. Wichtig ist, daß über die Luftversorgung 14 und den geöffneten Druckminderer 7 Luft nur über die Leitung 19 und das geöffnete Absperrventil 8 und die zugeordnete Förderluftdüse 9 strömt, während die Leitung 18 abgeschlossen ist.

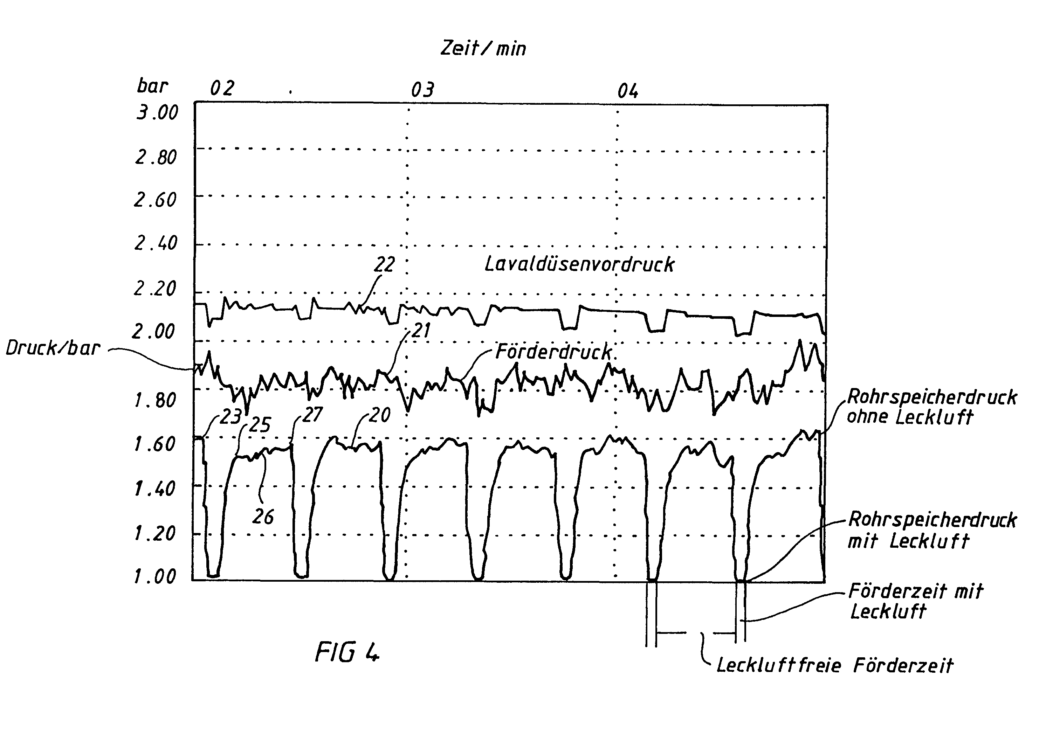

In diesem Beispiel arbeitet die Zellenradschleuse vollständig ohne Leckluft, weil sämtliche offenen Querschnitte auf der Einlaßseite der Zellenradschleuse 2 hermetisch abgeschlossen sind und daher ein Leckluftverlust nicht stattfinden kann. D. h. es herrscht der gleiche Druck p1 über der Zellenradschleuse (auf der Einströmseite der Zellenradschleuse 2) genauso wie in der Förderleitung 11, wo ebenfalls der Druck p2=p1 herrscht. Hierzu wird auf Figur 4 und das dortige Druck-Zeitdiagramm verwiesen.

In Figur 4 sind mehrere Diagramme 20,21,22 übereinander aufgetragen. Das Diagramm 20 ist die Darstellung des Druck-Zeitverlaufes im Rohrspeicher 3 bei Betrieb der Anlage. Das Diagramm 21 ist der Druck-Zeitverlauf in der Förderleitung 11 1 und das Diagramm 22 ist der Druck-Zeitverlauf stromabwärts des Druckminderers 7 in der Leitung 14.

Der Einfachheit halber sind die Druckverläufe des Diagramms 21 und des Diagramms 20 vertikal versetzt dargestellt, obwohl dort ein gleicher Spitzendruck herrscht. Anderenfalls hätte das Diagramm 21 in die Spitzenkurven des Diagramms 20 hinein geschnitten und die Übersichtlichkeit hätte hierdurch gelitten.

Auf der Ordinate ist der Druck in bar aufgetragen, während auf der Abszisse eine Zeit in Minuten aufgetragen ist. Der Druckverlauf im Rohrspeicher (Diagramm 20) zeigt nun, daß zum Zeitpunkt 23 und 25 jeweils ein oberer, etwa horizontaler Kurvenast 26 durchlaufen wird. Dieser Kurvenast 26, der von dem Zeitpunkt 25 bis zu dem Zeitpunkt 27 beschreibt die leckluftfreie Förderzeit. In dieser Zeit 26 ist also das obere Verschlußventil 1 geschlossen, ebenso wie das Entlüftungsventil 4 und es liegt demgemäß der gleiche Druck p1 im Rohrspeicher 3 wie auch der Druck p2 in der Förderleitung 11 an, so daß die beiden Drücke übereinstimmen, so wie dies mit der Übereinstimmung des Kurvenastes 26 mit dem Diagramm 21 dargestellt wurde. In diesem Zeitraum läuft also die Zellenradschleuse 2 nach wie vor kontinuierlich und entleert dementsprechend auch den Rohrspeicher 3 kontinuierlich, ohne daß irgend eine Druckdifferenz anliegt. Diese Zeit ist also die leckluftfreie Förderzeit, weil keinerlei Leckluft durch die Zellenradschleuse 2 strömen kann. Der Rohrspeicher 3 wird während dieses Zeitraumes (vom Zeitpunkt 25 bis zum Zeitpunkt 27) etwa 90% seines Füllvolumens entleert. Während dieser Zeit strömt bei geöffnetem Absperrventil 8 über die Förderluftdüse 9 eine genau dimensionierte Luftmenge in die Förderleitung 11 ein, welche eine konstante Fördergeschwindigkeit von etwa 6 m pro Sekunde gewährleistet.

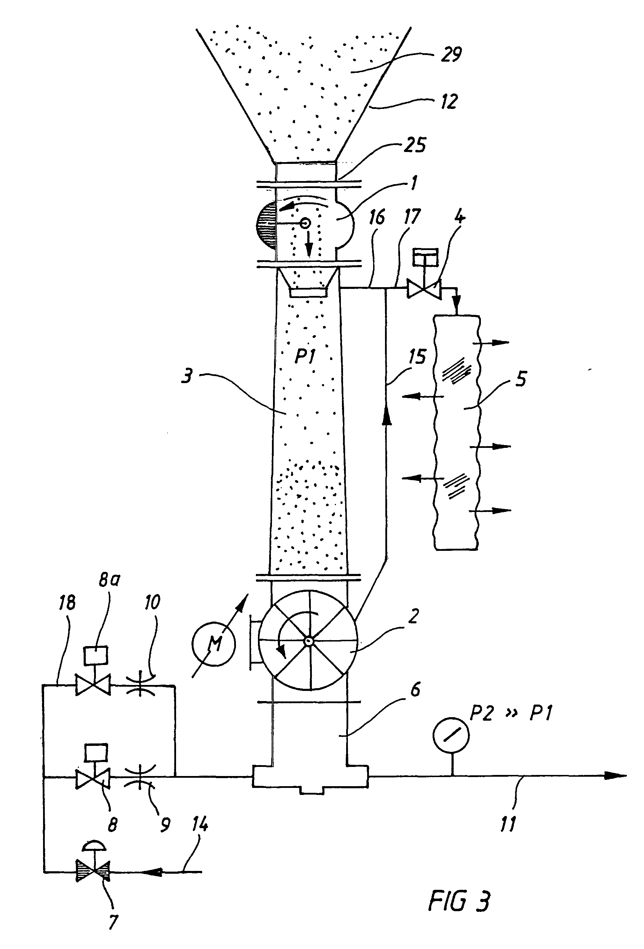

Nach nahezu vollständiger Entleerung des Rohrspeichers 3 wird nun der Betriebszustand nach dem Schaubild Figur 3 eingeschaltet. Dieser Betriebszustand zeichnet sich dadurch aus, daß eine Förderzeit mit Leckluft im Bereich des horizontalen Kurvenastes bei den Zeitpunkten 24 durchlaufen wird. In diesem relativ kurzen Zeitraum wird zunächst das Entlüftungsventil 4 geöffnet, wodurch der Rohrspeicher 3 über die Leitung 16 sofort entlüftet wird und hiermit beginnt auch schon das Strömen der unerwünschten Leckluft. Kurz nach dem Öffnen des Entlüftungsventils 4 wird auch das Verschlußventil 1 geöffnet, so daß im freien Fall das Fördergut von dem Silo 12 in den Rohrspeicher 3 fällt und diesen praktisch schlagartig auffüllt. Gleichzeitig strömt damit auch Leckluft über die Leckluftleitung 15 bei der nach wie vor kontinuierlich durchlaufenden Zellenradschleuse 2, die jetzt einer Druckdifferenz zwischen dem Druck im Rohrspeicher 3 und der Förderleitung 11 unterworfen ist. Im Rohrspeicher 3 herrscht nun Atmosphärendruck. Um nun die zusätzlich strömende Leckluft auszugleichen ist es notwendig, das Absperrventil 8 zu schließen und statt dessen in der Leitung 18 das Absperrventil 8a zu öffnen und eine entsprechend größer dimensionierte Förderluftdüse 10 betreiben, damit die Fördergeschwindigkeit von z. B. 6m/s erhalten bleibt. Es muß also mehr Luft in die Luftversorgung 14 eingespeist werden, um die gleiche Fördergeschwindigkeit beizubehalten.

Ziel ist, daß dieser eigentlich unerwünschte Zeitraum der leckluftbehafteten Förderung möglichst kurz gehalten wird. Dies ergibt sich aus dem Diagramm in Figur 4, wo erkennbar ist, daß nur zwischen den Zeiträumen 23, 25 der untere horizontale Kurvenast im Zeitpunkt 24 durchlaufen wird und nur während dieser kurzen Zeit erfolgt eine leckluftbehaftete Förderung.

Hierdurch ergibt sich also der Vorteil der vorliegenden Erfindung, wie aus dem Diagramm nach Figur 4 gut erkennbar ist, daß die leckluftbehafteten Förderzeiten (entsprechend dem Zeitpunkt 24) ein Bruchteil der leckluftfreien Förderzeit zwischen den Zeitpunkten 25, 27 beträgt.

Bei einer mittleren Leistung von 5 t/Std. Kunststoffgranulat können 22 KW an Kompressorleistung eingespart werden. Dadurch ergibt sich der Vorteil, daß der Luftkompressor wesentlich kleiner dimensioniert werden kann, weil die vorher notwendige Leckluftmenge nicht mehr aufgebracht werden muß. Die Anlage kann auch betriebssicherer betrieben werden, weil beim Entleeren des Rohrspeichers 3 entsprechend dem Diagramm nach Figur 2 störende Leckluft entfällt.

Weitere Vorteile der erfindungsgemäßen Maßnahmen sind, daß mit der Vorrichtung bestehend aus einem Rohrspeicher, einem Verschlußventil 1 und den dazugehörenden weiteren Ventilen ein einfaches Zusatzgerät geschaffen wird, welches an bisher herkömmliche Anlagen angebaut werden kann und hierdurch eine wesentliche Einsparung von Leckluft erfolgt.

Im Diagramm 22 ist im übrigen noch der Druckverlauf an den Lavaldüsen 9, 10 stromabwärts des Druckminderers 7 dargestellt. In Zeiten der leckluftbehafteten Förderung nimmt der anliegende Druck durch den erhöhten Luftverbrauch sichtbar ab.

Entsprechend dem Diagramm in Figur 4 wiederholt sich der Vorgang der leckluftfreien Entleerung des Rohrspeichers 3 und der kurzzeitigen leckluftbehafteten Füllung des Rohrspeichers 3 in kurzen Abständen hintereinander, wobei im Minutenabstand etwa zwei Entleervorgänge und drei Befüllvorgänge stattfinden.

## Patentansprüche

1. Verfahren zum Befüllen einer Dichtstrom-Förderleitung (11) mit Schüttgut (29), bei dem die über eine Druckluftversorgung (14) mit einem gewissen Förderdruck (P2) beaufschlagte Förderleitung (11) durch eine kontinuierlich arbeitende Zellenradschleuse (2) aus einem Vorratssilo (12) mit Schüttgut (29) befüllt wird, wobei zwischen dem Vorratssilo (12) und der Zellenradschleuse (2) ein Verschlußventil (1) mit einem sich daran anschließenden Speicher (3) angeordnet ist, wobei der Speicher (3) durch das sich taktweise öffnende und schließende Verschlußventil (1) intermittierend mit Schüttgut (29) befüllt wird, während die Zellenradschleuse (2) das im Speicher (3) befindliche Schüttgut (29) kontinuierlich in die Förderleitung (11) einspeist, wobei bei geschlossenem Verschlußventil (1) der Druck (P1) im Speicher (3) dem Druck (P2) in der Förderleitung (11) entspricht, dadurch gekennzeichnet, daß der als Rohrspeicher (3) ausgebildete Speicher während des Befüllens über eine Entlüftungsleitung (16, 17) entlüftet wird, und daß während des Befüllens des Rohrspeichers (3) der darin herrschende Druck (P1) dem Atmosphärendruck entspricht und wesentlich kleiner ist als der Druck (P2) in der Förderleitung (11), und daß bei geschlossenem Verschlußventil (1) auch die Entlüftungsleitung (16, 17) des Rohrspeichers (3) geschlossen ist, und daß die Zellenradschleuse (2) über eine Leckluftleitung (15, 16) mit dem Rohrspeicher (3) in Verbindung steht.

2. Verfahren nach Anspruch 1, dadurch gekennzeichnet, daß das Volumen des Rohrspeichers (3) in festem Verhältnis zur Taktzeit des Verschlußventils (1) steht.

3. Verfahren nach einem der Ansprüche 1 oder 2, dadurch gekennzeichnet, daß der Rohrspeicher (3) pro Zeiteinheit mit einem Vielfachen an Menge des Schüttgutes (29) befüllt wird als der Förderleitung der Zellenradschleuse (2) entspricht.

4. Verfahren nach einem der Ansprüche 1 - 3, dadurch gekennzeichnet, daß der Rohrspeicher (3) bei geöffnetem Verschlußventil 81) mit Hilfe der Schwerkraft schlagartig befüllt wird.

5. Verfahren nach einem der Ansprüche 1 - 4, dadurch gekennzeichnet, daß während des Befüllens des Rohrspeichers (3) die Förderluftmenge für die Förderleitung (11) um die Höhe der zu erwartenden Leckluftverluste erhöht wird.

6. Verfahren nach einem der Ansprüche 1 - 5, dadurch gekennzeichnet, daß die Füllzeit zum Befüllen des Rohrspeichers (3) mit Schüttgut (29) wesentlich kleiner ist, als die benötigte Zeit der Zellenradschleuse (2) zum Entleeren des Rohrspeichers (3).

7. Vorrichtung zum Befüllen einer Dichtstrom-Förderleitung (11) mit Schüttgut (29), mit einem Vorratssilo (12), von welchem das Schüttgut (29) mittels einer Zellenradschleuse (2) kontinuierlich in die durch eine Druckluftversorgung (14) mit einem gewissen Förderdruck (P2) beaufschlagte Förderleitung (11) eingespeist wird, wobei stromabwärts des Vorratssilos (12) ein Verschlußventil (1) angeordnet ist, an welches sich ein Speicher (3) anschließt, an welchen sich wiederum die Zellenradschleuse (2) anschließt, dadurch gekennzeichnet, daß der als Rohrspeicher (3) ausgebildete Speicher über eine Leitung (16, 17) und ein Entlüftungsventil (4) mit der Atmosphäre in Verbindung steht und dadurch bei geöffnetem Verschlußventil (1) der Druck (P1) innerhalb des Rohrspeichers (3) dem Atmosphärendruck entspricht und wesentlich kleiner ist als der Druck (P2) innerhalb der Förderleitung (11), und daß die Zellenradschleuse (2) über eine Leckluftleitung (15, 16) mit dem Rohrspeicher (3) verbunden ist, und dadurch bei geschlossenem Verschlußventil (1) der Druck (P19 innerhalb des Rohrspeichers (3) gleich groß ist wie der Druck (P2) innerhalb der Förderleitung (11).

8. Vorrichtung nach Anspruch 7, dadurch gekennzeichnet, daß der Rohrspeicher (3) weiterhin über einen Filtersack (5) mit der Atmosphäre in Verbindung steht.

9. Vorrichtung nach einem der Ansprüche 7 oder 8, dadurch gekennzeichnet, daß das Volumen des Rohrspeichers (3) um ein Vielfaches größer ist als dem Fördervolumen der Zellenradschleuse (2) pro Sekunde entspricht.

10. Vorrichtung nach einem der Ansprüche 7 bis 9, dadurch gekennzeichnet, daß die Druckluftversorgung (14) für die Förderleitung (11) stromabwärts eines Druckminderers (7) alternierend über jeweils eine von zwei parallel geschalteten Leitungen (18, 19) erfolgt, wobei jede Leitung über ein Absperrventil (8a, 8) und eine zugeordnete Förderluftdüse (10, 9) verfügt, welche unterschiedliche Luftfördermengen in den Leitungen (18, 19) zulassen.

11. Vorrichtung nach einem der Ansprüche 7 bis 10, dadurch gekennzeichnet, daß das Verschlußventil (1) sich in geschlossenem Zustand ohne Dichtmittel an der zugeordneten Zulaufbohrung (28) für das Schüttgut (29) anpresst.

## Claims

1. Method of filling a compact-flow conveyor pipeline (11) with bulk material (29), in which case the conveyor pipeline (11), acted on by way of a supply of compressed air (14) having a specific delivery pressure (P2), is filled with bulk material (29) from a storage silo (12) via a continuously operating cellular wheel sluice (2), a closure valve (1) with adjoining store (3) being located between the storage silo (12) and the cellular wheel sluice (2) and the store (3) being intermittently filled with bulk material (29) via the closure valve (1) which opens and closes in cycles, whilst the cellular wheel sluice (2) continuously feeds the bulk material (29) contained in the store (3) into the conveyor pipeline (11), the pressure (P1) in the store (3) corresponding to the pressure (P2) in the conveyor pipeline (11) when the closure valve (1) is closed,
characterized in that
the store, taking the form of a tubular store (3), is de-aerated during filling via the air-vent pipe (16, 17);
and in that, during filling of the tubular store (3), the pressure (P1) prevailing therein corresponds to the atmospheric pressure and is substantially less than the pressure (P2) in the conveyor pipeline (11);
and in that, when the closure valve (1) is closed, the air-vent pipe (16, 17) of the tubular store (3) is also closed;
and in that the cellular wheel sluice (2) communicates via an air-leakage pipe (15, 16) with the tubular store (3).

2. Method according to Claim 1,
characterized in that
the volume of the tubular store (3) is at a fixed ratio to the cycle time of the closure valve (1).

3. Method according to one of Claims 1 or 2,
characterized in that
the tubular store (3) is filled per unit of time with a quantity of bulk material (29) which is a multiple of that corresponding to the output of the cellular wheel sluice.

4. Method according to one of Claims 1 to 3,
characterized in that,
when the closure valve (1) is opened, the tubular store (3) is suddenly filled by gravitational force.

5. Method according to one of Claims 1 to 4,
characterized in that,
during filling of the tubular store (3), the quantity of delivery air for the conveyor pipeline (11) is increased by the amount of the expected air leakage losses.

6. Method according to one of Claims 1 to 5, characterized in that the filling time for filling the tubular store (3) with bulk material (29) is substantially less than the time needed by the cellular wheel sluice (2) for emptying the tubular store (3).

7. Apparatus for filling a compact-flow conveyor pipeline (11) with bulk material (29), having a storage silo (12), from which the bulk material (29) is continuously supplied by means of a cellular wheel sluice (2) into the conveyor pipeline (11), which is acted upon via a supply of compressed air having a specific delivery pressure (P2), in which case, downstream of the storage silo (12), a closure valve (1) is located, followed on by a store (3), which in turn is followed on by the cellular wheel sluice (2),
characterized in that
the store (3), taking the form of a tubular store, communicates via a pipe (16, 17) and an air-vent valve (4) with the atmosphere and thus, when the closure valve (1) is opened, the pressure (P1) inside the tubular store (3) corresponds to the atmospheric pressure and is substantially less than the pressure (P2) inside the conveyor pipeline (11);
and in that the cellular wheel sluice (2) is connected to the tubular store (3) via an air-leakage pipe (15, 16), and thus, when the closure valve (1) is closed, the pressure (P1) inside the tubular store (3) is equal to the pressure (P2) inside the conveyor pipeline (11).

8. Apparatus according to Claim 7,
characterized in that
the tubular store (3) also communicates with the atmosphere via a filter bag (5).

9. Apparatus according to one of Claims 7 or 8,
characterized in that
the volume of the tubular store (3) is many times greater than that corresponding to the volume delivered per second by the cellular wheel sluice (2).

10. Apparatus according to one of Claims 7 to 9,
characterized in that,
downstream of a pressure reducer (7), the compressed air (14) for the conveyor pipeline (11) is supplied alternately via one of two parallel-connected pipes (18, 19), each pipe being equipped with a shut-off valve (8a, 8) and an associated air-delivery nozzle (10, 9), which admit different quantities of delivery air into the pipes (18, 19).

11. Apparatus according to one of Claims 7 to 10,
characterized in that
the closure valve (1), in its closed state without sealing means, presses against the associated inlet hole (28) for the bulk material (29).

## Revendications

1. Procédé de remplissage d'une conduite de transport en flux dense (11) par du produit en vrac (29), dans lequel la conduite de transport (11) alimentée à une pression donnée de refoulement (P2), par l'intermédiaire d'une alimentation en air comprimé (14), est remplie au moyen d'une écluse ou sas à roue cellulaire (2) travaillant de façon continue, depuis un silo de stockage (12), par du produit en vrac (29), entre le silo de stockage (12) et l'écluse à roue cellulaire (2) étant disposée une soupape de fermeture (1), munie d'un accumulateur (3) s'y raccordant, l'accumulateur (3) étant rempli de façon intermittente par du produit en vrac (29), au moyen de la soupape de fermeture (1) qui s'ouvre et se ferme de façon cadencée, tandis que l'écluse à roue cellulaire (2) injecte le produit en vrac (29) se trouvant dans l'accumulateur (3), de façon continue, dans la conduite de transport (11), la pression (P1) régnant dans l'accumulateur (3) correspondant à la pression (P2) régnant dans la conduite de transport (11) lorsque la soupape de fermeture (1) est fermée, caractérisé en ce que l'accumulateur, réalisé sous la forme d'accumulateur tubulaire (3), est désaéré pendant le remplissage, par l'intermédiaire d'une conduite de désaération (16, 17) et en ce que pendant le remplissage de l'accumulateur tubulaire (3), la pression (P1) y régnant correspond à la pression atmosphérique et est sensiblement inférieure à la pression (P2) régnant dans la conduite de transport (11), et en ce que, lorsque la soupape de fermeture (1) est fermée, également la conduite de désaération (16, 17) de l'accumulateur (3) est fermée et en ce que l'écluse à roue cellulaire (2) est reliée à l'accumulateur tubulaire (3), par l'intermédiaire d'une conduite d'air de fuite (15, 16).

2. Procédé selon la revendication 1, caractérisé en ce que le volume de l'accumulateur tubulaire (3) est dans un rapport fixe par rapport au temps de cadencement de la soupape de fermeture (1).

3. Procédé selon l'une des revendications 1 ou 2, caractérisé en ce que l'accumulateur tubulaire (3) est rempli, par unité de temps, d'un multiple de la quantité en vrac (29) par rapport à ce qui correspond à la conduite de transport de l'écluse à roue cellulaire (2).

4. Procédé selon l'une des revendications 1 à 3, caractérisé en ce que l'accumulateur tubulaire (3) est rempli d'un coup à l'aide de la force de gravité, lorsque la soupape de fermeture (81) est ouverte.

5. Procédé selon l'une des revendications 1 à 4, caractérisé en ce que, pendant le remplissage de l'accumulateur tubulaire (3), la quantité d'air de transport prévue pour la conduite de transport (11) est augmentée, de la valeur des pertes de fuites d'air attendues.

6. Procédé selon l'une des revendications 1 à 5, caractérisé en ce que le temps de remplissage prévu pour remplir l'accumulateur tubulaire (3) par du produit en vrac (29) est notablement inférieur au temps nécessaire à l'écluse à roue cellulaire (2) pour procéder au vidage de l'accumulateur tubulaire (3).

7. Dispositif de remplissage d'une conduite de transport à flux dense (11) par du produit en vrac (29), avec un silo de stockage (12) d'où le produit en vrac (29) est injecté au moyen d'une écluse à roue cellulaire (2), de façon continue, dans la conduite de transport (11) alimentée par une pression donnée de refoulement (P2) au moyen d'une alimentation en air comprimé (14), en aval du silo de stockage (12) étant disposée une soupape de fermeture (1) à laquelle se raccorde un accumulateur (3) auquel de nouveau se raccorde l'écluse à roue cellulaire (2), caractérisé en ce que l'accumulateur, réalisé sous la forme d'accumulateur tubulaire (3), est relié à l'atmosphère par une conduite (16, 17) et une soupape de désaération (4) et, de ce fait, lorsque la soupape de fermeture (1) est ouverte, la pression (P1) régnant à l'intérieur de l'accumulateur tubulaire (3) correspond à la pression atmosphérique et est notablement inférieure à la pression (P2) régnant à l'intérieur de la conduite de transport (11), et en ce que l'écluse à roue cellulaire (2) est reliée à l'accumulateur tubulaire (3) par une conduite d'air de fuite (15, 16) et, de ce fait, lorsque la soupape de fermeture (1) est fermée, la pression (P1) régnant à l'intérieur de l'accumulateur tubulaire (3) est de même valeur que la pression (P2) régnant à l'intérieur de la conduite tubulaire (11).

8. Dispositif selon la revendication 7, caractérisé en ce que l'accumulateur tubulaire (3) est en plus relié à l'atmosphère par l'intermédiaire d'un sac ou manche de filtration (5).

9. Dispositif selon l'une des revendications 7 ou 8, caractérisé en ce que le volume de l'accumulateur tubulaire (3) est de plusieurs fois supérieur à la valeur du volume de transport, par seconde, de l'écluse à roue cellulaire (2).

10. Dispositif selon l'une des revendications 7 à 9, caractérisé en ce que l'alimentation en air comprimé (14) prévue pour la conduite de transport (11) s'effectue en aval d'un réducteur de pression on détendeur (7), de façon alternée, chaque fois par l'une des deux conduites (18, 19) branchées en parallèle, chaque conduite disposant d'une soupape d'isolement (8a, 8) et d'une buse d'air de transport (10, 9) associée, qui admettent des quantités d'air de transport différentes dans les conduites (18, 19).

11. Dispositif selon l'une des revendications 7 à 10, caractérisé en ce que la soupape de fermeture (1) presse, à l'état fermé, sans moyen d'étanchéité, sur le perçage d'amenée (28) associé, prévu pour le produit en vrac (29).
